# EUROPEAN PATENT APPLICATION

(11) **EP 1 782 868 A1**
(43) Date of publication of application: **09.05.2007**
(21) Application number: 06022549.7
(22) Date of filing: 27.10.2006
(51) Int. Cl.: A63F 13/12

(54) **Game execution method in a wireless terminal**

(30) Priority: 27.10.2005 KR 20050101833
(71) Applicant: Samsung Electronics Co., Ltd., Suwon-si, Gyeonggi-Do (KR)
(72) Inventor: Seo, Jeong-Wook, Yeongtong-gu Suwon-si Gyeonggi-do (KR); Paek, Chi-Hyeon, Yeongtong-gu Suwon-si Gyeonggi-do (KR); Park, Wei-Jin, Yeongtong-gu Suwon-si Gyeonggi-do (KR)
(74) Representative: Lang, Johannes

(57) **Abstract**

A method of executing an avatar game with at least one wireless terminal, which includes the steps of setting a communication link with the at least one wireless terminal and transmitting/receiving information on avatars to be applied to the avatar game if a key of the avatar game is input through a user's request, applying the transmitted/received information on avatars to the avatar game so as to execute the avatar game, and reflecting an execution result of the avatar game in the information on avatars so as to update the information.

## Description

### BACKGROUND OF THE INVENTION

### Field of the Invention:

The present invention relates to a method of executing a game function in a wireless terminal. More particularly, the present invention relates to a method of applying avatars used in an avatar function provided in a wireless terminal to a multi-user game so as to execute the game and to reflect a result of the game to the avatars.

### Description of the Related Art:

In general, wireless terminals refer to devices provided with a communication function of talking over a phone while moving or exchanging data, such as PDA (Personal Digital Assistant) terminals, PCS (Personal Communication Services) phones, IMT-2000 (International Mobile Telecommunication-2000) terminals, and GSM (Global System For Mobile Communication) terminals.

Although such wireless terminals are provided for the purpose of performing a telephone call function, they have recently provided various kinds of additional function services such as camera functions, digital broadcasting reception functions, avatar functions and game functions, including short message transmission/reception functions, memory functions for storing and retrieving telephone numbers, locking functions, alarm functions, background screen setting functions, and area code confirmation functions.

These wireless terminals provide users living in modem society with amusement and convenience through the various additional services described above.

Particularly, among the additional functions, the avatar function denotes avatar services in which an avatar changes (for example, grows) automatically depending on the life and habits in using a user's wireless terminal, and the game function thereof denotes a game that a user can generally enjoy in accordance with rules provided thereto.

In such a game function, there is typically a single-user game that a user can enjoy by themselves using a built-in game program without connection to other wireless terminals, and the game function enables the user to enjoy the game by themselves using the built-in game program without connection to other wireless terminals. Although the user can very easily enjoy a game using the single-user game, they may soon become bored with it such as in a case where they become skilled to some degree while playing it by themselves. Further, if the user easily grasps rules provided for the game, it may not arouse further interest. Thus, a multi-user game function in which a user can simultaneously enjoy a game with other wireless terminal users has been executed such that the game function added to a wireless terminal can be a more enjoyable function to the user.

However, since the aforementioned multi-user game also has a game level controlled with fixed characters and patterns whenever it is started, a user may become bored in a case where they become skilled in the game to some degree and it may not arouse further interest in them any. Further, the user playing the game may be soon become tired thereof.

Accordingly, a need exists for a system and method for providing single and multi-user game functions that provide a user with greater enjoyment.

### SUMMARY OF THE INVENTION

Accordingly, embodiments of the present invention have been made to substantially solve the above-mentioned and other problems occurring in the prior art, and it is an object of embodiments of the present invention to provide a method of executing a game function in a wireless terminal. More particularly, it is an object of embodiments of the present invention to provide a method of applying avatars used in an avatar function provided in a wireless terminal to a multi-user game so as to execute the game, and to reflect the results of the game to the avatars applied thereto.

It is another object of embodiments of the present invention to provide a method of applying avatars used in an avatar function provided in a wireless terminal to an NPC (Non-Player Character) avatar game so as to execute the game and to reflect a result of the avatar game to the avatars applied thereto.

In order to accomplish these and other objects of the present invention, according to an aspect of embodiments of the present invention, a method of executing an avatar game with at least one wireless terminal in the wireless terminal is provided, which comprises the steps of setting a communication link with the at least one wireless terminal and transmitting/receiving information on avatars to be applied to the avatar game if a key of the avatar game is input through a user's request, applying the transmitted/received information on avatars to the avatar game so as to execute the avatar game, and reflecting an execution result of the avatar game in the information on avatars so as to update the information.

In order to accomplish these and other objects of the present invention, according to another aspect of embodiments of the present invention, a method of executing an avatar game in a wireless terminal is provided, which comprises the steps of selecting an avatar to be applied to the avatar game and identifying information of the selected avatar if a key of the avatar game is input through a user's request, selecting an avatar that will compete with the selected avatar, applying the information on the selected avatar and information on the avatar, which will compete, to the avatar game so as to execute the avatar game, and reflecting an execution result of the avatar game in the information on the avatar applied to the avatar game so as to update the information.

### BRIEF DESCRIPTION OF THE DRAWINGS

The above and other objects, features and advantages of the present invention will become more apparent from the following detailed description taken in conjunction with the accompanying drawings, in which:
FIG. 1 is a view illustrating a configuration of an exemplary system for enabling communication links between wireless terminals using a local area network applied to an embodiment of the present invention;
FIG. 2 is a block diagram showing a configuration of an exemplary wireless terminal according to an embodiment of the present invention;
FIG. 3 is a flowchart illustrating an exemplary operation of executing an avatar game according to an embodiment of the present invention;
FIG. 4 is a flowchart illustrating an exemplary operation of initializing a multi-user avatar game in a master terminal according to an embodiment of the present invention;
FIG. 5 is a flowchart illustrating an exemplary operation of initializing the multi-user avatar game in a slave terminal according to an embodiment of the present invention;
FIG. 6 is an exemplary view showing screens displayed while the avatar game is proceeding according to an embodiment of the present invention;
FIG. 7 is an exemplary view showing screens displayed while a 'Quiz Match' avatar game is proceeding according to an embodiment of the present invention;
FIG. 8 is an exemplary view showing screens displayed while an 'OX Quiz' avatar game is proceeding according to an embodiment of the present invention;
FIG. 9 is a flowchart illustrating an exemplary operation of producing a problem according to an embodiment of the present invention;
FIG. 10 is a flowchart illustrating an exemplary operation of reflecting an execution result of the multi-user avatar game in the master terminal according to an embodiment of the present invention;
FIG. 11 is a flowchart illustrating an exemplary operation of reflecting an execution result of the multi-user avatar game in the slave terminal according to an embodiment of the present invention;
FIG. 12 is an exemplary view showing screens on which a result of the avatar game is displayed according to an embodiment of the present invention;
FIG. 13 is a flowchart illustrating an exemplary operation of selecting an avatar to be applied to the avatar game according to an embodiment of the present invention;
FIG. 14 is an exemplary view showing a screen on which the image of an avatar to be selected is displayed according to an embodiment of the present invention;
FIG. 15 is a flowchart illustrating an exemplary operation of initializing an NPC avatar game in the wireless terminal according to an embodiment of the present invention;
FIG. 16 is an exemplary view showing screens on which the image of an avatar to be applied to the NPC avatar game is displayed according to an embodiment of the present invention; and
FIG. 17 is a flowchart illustrating an exemplary operation of reflecting an execution result of the NPC avatar game in the wireless terminal according to an embodiment of the present invention.

Throughout the drawings, like reference numerals will be understood to refer to like parts, components and structures.

### DETAILED DESCRIPTION OF EXEMPLARY EMBODIMENTS

Hereinafter, exemplary embodiments of the present invention will be described with reference to the accompanying drawings. In the following description, the same elements will be designated by the same reference numerals although they are shown in different drawings. Further, various specific definitions found in the following description, such as specific values of packet identifications, contents of displayed information, and so forth, are provided to help in a general understanding of exemplary embodiments of the present invention, and it is apparent to those skilled in the art that the present invention can be implemented without such definitions. Further, in the following description of embodiments of the present invention, a detailed description of known functions and configurations incorporated herein are omitted for clarity and conciseness.

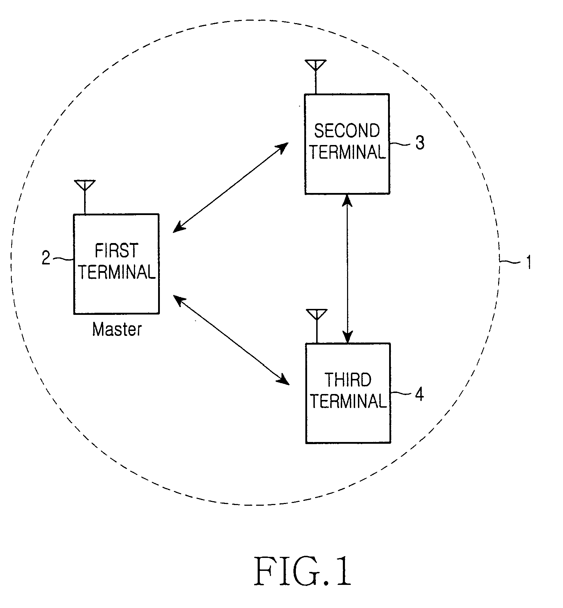

FIG. 1 is a view illustrating a configuration of an exemplary system for enabling communication links between wireless terminals using a local area network applied to an embodiment of the present invention. A Bluetooth system for enabling execution of a multi-user avatar game between wireless terminals using Bluetooth will be described with reference to FIG. 1, but embodiments of the present invention are not limited thereto. As shown in FIG. 1, Bluetooth supports point-to-point and point-to-multipoint connections. Devices sharing one channel preferably should share capacity, and a set of which is referred to as a piconet 1. Here, the piconet may be defined as an assembly of devices in an ad-hoc form connected through Bluetooth, with three devices comprised of first, second and third wireless terminals 2, 3 and 4 connected to the one piconet 1. Further, one of the three wireless terminals, for example, the first terminal 2 becomes a master for managing the piconet 1, such as through frequency hopping pattern generation, and the second and third terminals 3 and 4 are connected as slaves.

An exemplary process of forming the piconet 1 is substantially as follows. A status where devices are not connected to one another is referred to as a standby status, in which each of the devices receives a new message every 1.28 seconds, and if one of the devices receives a request for connection, the device becomes a master to start recognizing (inquiring/paging) the other devices. At this time, the devices each having an 8-bit park address allocated thereto, are in a park status. Thereafter, if each of the second and third terminals 3 and 4 communicated with the first terminal 2, that is, a master, the first terminal 2 receives a 3-bit (since 2³=8, that is, one of eight addresses is used as a broadcasting address, three devices form one piconet) active address allocated thereto, the piconet 1 is formed.

The devices in the active status are again in three statuses, that is, an active mode for practical communications, a hold mode and a sniff mode (a power consumption status lower than the active mode). Although the hold and sniff modes participate in the piconet 1, they do not influence the entire traffic. The first terminal 2, which is a master, sends an inquiry containing a key for connection at an interval of 625µs to synchronize with the second and third terminals 3 and 4, which are slaves, within 2 seconds. After each of the second and third terminals 3 and 4, has received a 3-bit active address allocated thereto, and again received a page message from the first terminal 2, they are synchronized using a hopping pattern determined by the first terminal 2. Thereafter, authentication is performed on one another, and a password key used in the authentication is made using a random number generated from the first terminal 2, and the exclusive OR (XOR) MAC address of the second and third terminals. If the authentication is complicated, an exclusive key is sent, and a data transmission/reception step is started.

The first terminal 2, which is a master device, controls all of the traffic on a channel. Further, a scatternet is comprised of a plurality of independent and asynchronous piconets 1. Users of each of the piconets 1 in the scatternet have only a 1MHz hop channel. Further, each of the first, second and third wireless terminals 2, 3 and 4 may be used as not only a slave, but also as a master in other piconets.

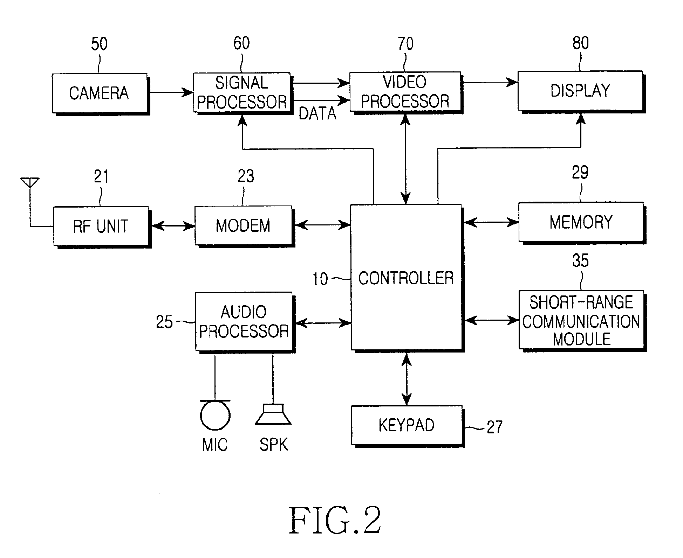

FIG. 2 is a block diagram showing a configuration of an exemplary wireless terminal according to an embodiment of the present invention. Here, the wireless terminal may be a mobile telephone, but embodiments of the present invention are not limited thereto.

Referring to FIG. 2, an RF unit 21 performs communications of the wireless terminal. The RF unit 21 comprises an RF transmitter for upwardly converting and amplifying the frequency of a transmitted signal, an RF receiver for low-noise amplifying a received signal and downwardly converting the frequency thereof, and the like.

A modem 23 is provided with a transmitter for encoding and modulating the transmitted signal, a receiver for demodulating and decoding the received signal, and the like.

An audio processor 25 is provided and can comprise a codec, such as a data codec for processing packet data and the like, and an audio codec for processing an audio signal such as voice. The audio processor 25 performs the function of converting a digital audio signal received from the modem 23 into an analog signal through the audio codec so as to reproduce it through a speaker SPK, or converting a transmitted analog audio signal from a microphone MIC into a digital audio signal through the audio codec so as to transmit it to the modem 23. The codec may be separately provided or included in a controller 10.

A keypad 27 is provided with keys for inputting numeral and character information, functional keys for setting various kinds of functions, and the like. According to exemplary embodiments of the present invention, a functional key is also provided for executing a multi-user game, an NPC avatar game, and the like.

A memory 29 can be configured as a program memory and a data memory. In the program memory, programs are stored for controlling a general operation of the wireless terminal, programs required in executing the multi-user avatar game and the NPC (Non-Player Character) avatar game according to exemplary embodiments of the present invention, and programs for using and breeding avatars in accordance with an avatar function. Further, the data memory performs a function of temporarily storing data produced while executing the programs. In the data memory, information on the avatars used and bred according to exemplary embodiments of the present invention, and scores and avatar money obtained while executing the multi-user avatar game or the NPC (Non-Player Character) avatar game, can be stored.

The controller 10 performs a function of controlling a general operation of the wireless terminal, and may include the modem 23 and the codec. Further, if a multi-user avatar game key is input according to embodiments of the present invention, the controller 10 sets a communication link with at least one wireless terminal, and controls it to collect avatar information to be applied to the multi-user avatar game. Furthermore, the controller 10 controls the wireless terminal to execute the multi-user avatar game by applying the collected avatar information thereto, and to reflect an execution result of the multi-user avatar game to the avatar information so as to update it when the execution of the multi-user avatar game is ended. In addition, if an NPC avatar game key is input, the controller 10 identifies avatar information used in the avatar function, and if avatars that will compete with the avatar used in the avatar function are selected, the controller 10 controls the wireless terminal to execute the avatar game by applying the information on the avatars that will compete with the avatar used in the avatar function to the NPC avatar game. Moreover, when the execution of the NPC avatar game is ended, the controller 10 controls the wireless terminal to reflect an execution result of the NPC avatar game to the avatar information so as to update it.

A short-range communication module 35 may comprise a Bluetooth module, an infrared data communication (IrDA) module or an Ultra Wide Band (UMB) module. In an exemplary embodiment of the present invention, the short-range communication module 35 preferably comprises the Bluetooth module. The Bluetooth module can transmit using a high frequency of 2.4GHz regardless of obstacles, and uses a maximum of 79 channels. Further, its power consumption is typically 0.3 mA in a standby status and 30 mA or so in data exchanges.

A camera 50 photographs video data and is provided with a camera sensor for converting a photographed optical signal into an electrical signal. Here, it is assumed for example that the camera sensor is a CCD sensor, but embodiments of the present invention are not limited thereto. According to exemplary embodiments of the present invention, the camera sensor performs a function of photographing an image of a document.

A signal processor 60 converts a video signal output from the camera 50 into an image signal. Here, the signal processor can be implemented for example with a DSP (Digital Signal Processor), but embodiments of the present invention are not limited thereto.

A video processor 70 performs a function of generating screen data for use in displaying the video signal output from the signal processor 60. The video processor 70 transmits a received video signal to be suitable for a standard of a display 80 under the control of the controller 10, and performs a function of compressing or decompressing the video data. Further, the video processor 70 transmits a start address value of video data output to the display 80 or changes and sets the start address value under the control of the controller 10 to transmit it.

The display 80 displays video data output from the video processor 70. Here, the display 80 may comprise an LCD, and in this case, the display 80 may be provided with an LCD controller, a memory for storing video data, an LCD element, and the like. Here, in a case where the LCD is implemented having a touch screen mode, the keypad 27 and the LCD may constitute an input unit. The display 80 comprises a video data display on which video data is output.

An operation of a wireless terminal will now be described with reference to FIG. 1. If a user performs a dialing operation through the keypad 27, and then sets a transmission mode in transmission, the controller 10 senses this, processes dial information received through the modem 23, and then converts it into an RF signal through the RF unit 21 for output. Thereafter, if an opposite side subscriber generates a response signal, this is sensed through the RF unit 21 and the modem 23. Thereafter, the controller 10 performs a communication function by forming a speech channel through the audio processor 25. Further, the controller 10 senses an incoming call mode through the modem in the incoming call mode and generates a ring signal through the audio processor 25. Thereafter, if the user responds, the controller 10 senses this and also performs a communication function by forming a speech channel through the audio processor 25. Although speech communications have been described as an example in the transmission and incoming call modes, the controller 10 may also perform a data communication function of communicating packet data and video data without the speech communications. Further, in a case where the controller 10 performs a standby mode or a message communication, it displays message data processed through the modem 23 on the display 80.

An operation of executing a multi-user avatar game according to exemplary embodiments of the present invention in the wireless terminal described above will now be described. If a user inputs a multi-user avatar game key using the keypad 27, the controller 10 controls the short-range communication module 35 to set a communication link with at least one wireless terminal, and to collect avatar information to be applied to the multi-user avatar game. Further, the controller 10 controls the memory 29 to execute the multi-user avatar game by applying the collected avatar information thereto. Furthermore, when the execution of the multi-user avatar game is ended, the controller 10 controls the memory 29 to reflect an execution result of the multi-user avatar game to the avatar information so as to update it.

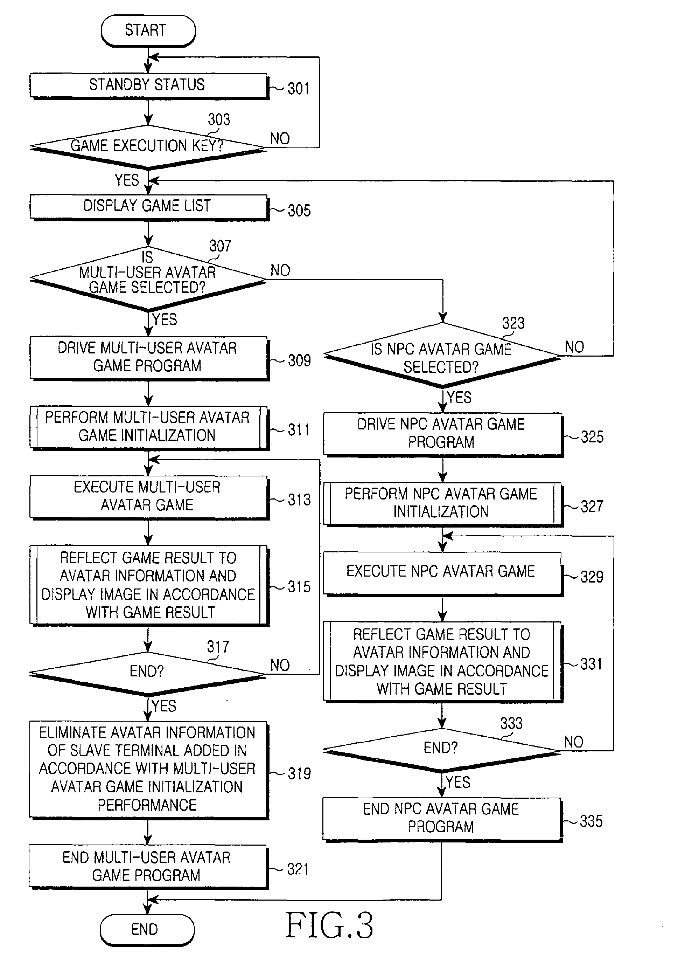

FIG. 3 is a flowchart illustrating an exemplary operation of executing an avatar game according to an embodiment of the present invention. An operation of executing a multi-user avatar game or an NPC (Non-Player Character) avatar game in a wireless terminal provided with an avatar function and a built-in short-range communication module will be described with reference to FIG. 3.

Here, the avatar function denotes avatar services in which an avatar changes automatically depending on the life and habits in using a user's wireless terminal, and the user can receive the impression that the avatar is alive and growing through dynamic changes thereof. Further, the avatar game is a game executed by applying the avatar thereto. For example, an avatar used in the avatar function is reflected to the game, and a difficulty and/or resulting score of the game is determined in accordance with information on the avatar. Further, the avatar game may be executed with the difficulty set as a default depending on a selection. Furthermore, the avatar game can comprise a multi-user avatar game and an NPC (Non-Player Character) avatar game, but embodiments of the present invention are not limited thereto. The multi-user avatar game denotes a game in which at least one wireless terminal performs a communication link to execute the avatar game at the same time, and the NPC avatar game denotes a game in which, although several game characters appear on one game, only one of them is operated by a user and the rest thereof are operated through a controller, that is, a predetermined scenario.

An avatar used in the avatar function grows while undergoing infancy, growth, maturity and completion periods, and an avatar growth numerical range (condition) is set for each of these periods. If the avatar reaches the growth numerical range in the avatar information, the avatar grows to the next level. Further, the state of the avatar may be changed by setting and providing information, such as SQ (Social Quotient), EQ (Emotional Quotient), IQ (Intelligence Quotient), HQ (Health Quotient), CQ (Communication Quotient) and PQ (Popularity Quotient), for the avatar information. The state does not denote a shape in which the avatar expresses their feeling or condition, but a final shape of the avatar used in the avatar function, for example, a state such as a doctor, a soldier, a spiritual teacher or a princess. Further, it is possible to change the avatar at the state of the middle period before they reach the final period by controlling a process of changing a state. For example, the states of infancy, growth, maturity and completion periods are possible with a shape such as a doctor, a soldier, a spiritual teacher or a princess.

The avatar growth numerical range may be set in accordance with the respective growth periods as described by way of example in the following Table 1.

**Table 1**

| Numerical Range (over ~ or less) | Growth State |
|---|---|
| 0 ~ 100 | Infancy Period |
| 101 ~ 200 | Growth Period |
| 201 ~ 300 | Maturity Period |
| 301 ~ 400 | Completion period |

Further, the avatar growth numerical value determining the growth of the avatar is determined depending on the life and habits in using a user's wireless terminal. The avatar growth numerical value is obtained by accumulating and adding reaction values corresponding to events generated from the wireless terminal as described by way of example in the following Table 2. Further, the reaction value may be applied to information for changing a state of the avatar so as to change it. Furthermore, the reaction value may vary depending on a setting.

**Table 2**

| | Events | Reaction Value |
|---|---|---|
| Telephone Directory | In adding a contact address to telephone directory | +2 increase |
| | In removing a contact address from telephone directory | -5 decrease |
| Short Message Service | In sending short message service (SMS) | +2 increase |
| | In receiving short message service (SMS) | +1 increase |
| | In sending multimedia message service (MMS) | +3 increase |
| | In receiving multimedia message service (MMS) | +2 increase |
| Camera | In camera photographing | +1 increase |
| | In moving image photographing | +2 increase |
| Telephone | In telephone reception | +1 increase |
| | In telephone transmission | +1 increase |
| | In telephone recording during absence | -4 decrease |
| WAP | In WAP connection | +5 increase |
| | In WAP download | +5 increase |
| Automatic Change | Automatically decrease when a terminal is not used for certain period of time | -2 decrease |

An operation of executing a multi-user avatar game or an NPC (Non-Player Character) avatar game in a wireless terminal provided with the aforementioned avatar function and a built-in short-range communication module will now be described. If a user inputs an avatar game key using the keypad 27 at step 301 while in standby status, the controller 10 senses this at step 303 and controls the memory 29 and the display 80 to display an avatar game list, such as the following example shown in Table 3 at step 305.

**Table 3**

| | Avatar Game List |
|---|---|
| 1 | Multi-user Avatar Game |
| 2 | NPC Avatar Game |

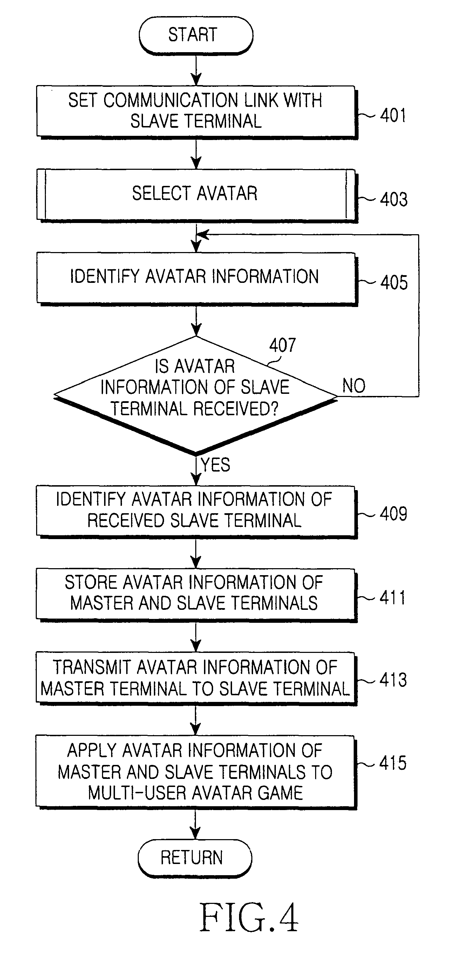

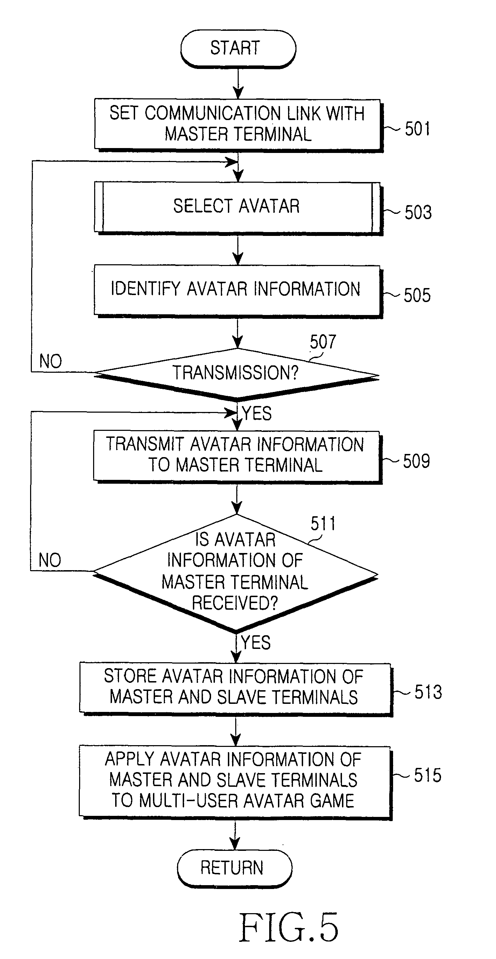

If a user selects the multi-user avatar game, which is a first item, in the avatar game list listed above using the keypad 27, the controller 10 senses this at step 307 and proceeds to step 309. The controller 10 controls the memory 29 to perform the multi-user avatar game program at step 309. Further, the controller 10 controls the short-range communication module 35 and the memory 29 to perform initialization for executing the multi-user avatar game at step 311. Here, the initialization for executing the multi-user avatar game denotes a series of processes of setting a communication link between at least one wireless terminal or terminals, and transmitting/receiving information on a selected avatar between the wireless terminals in which the communication link is set, if the avatar to be applied to the multi-user avatar game is selected. Further, the at least one wireless terminal or terminals, in which the communication link is set, are configured as master and slave terminals to be executed as shown in FIG. 1. An operation of performing initialization to execute the multi-user avatar game at step 311 will be described in greater detail below with reference to FIGS. 4 and 5.

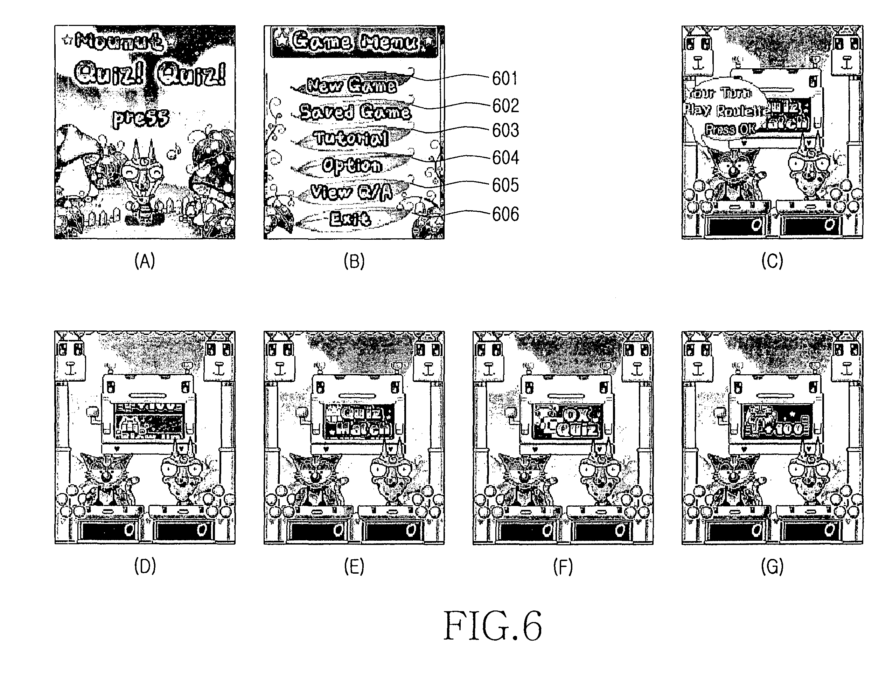

Further, in order to execute the multi-user avatar game, the controller 10 performs initialization, and then proceeds to step 313. The controller 10 controls the memory 29 and the display 80 to execute the multi-user avatar game in accordance with the performed initialization at step 313. An operation of executing the multi-user avatar game will be described in greater detail below with reference to FIGS. 6, 7, 8 and 9.

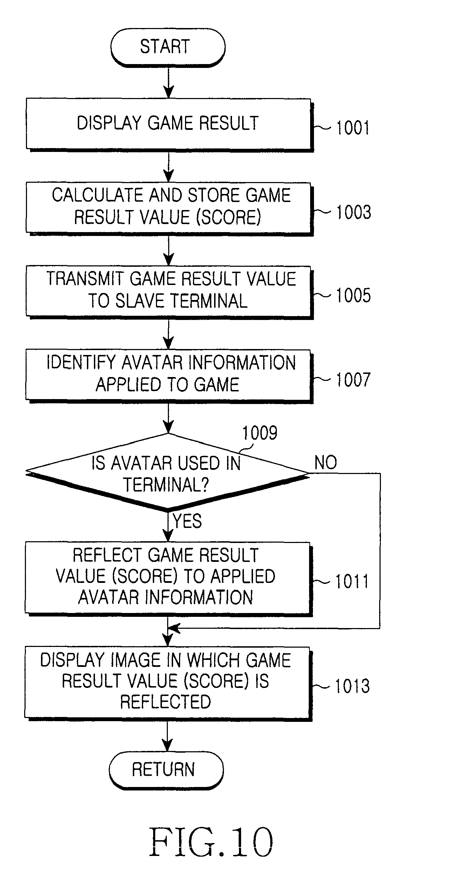

If the executed multi-user avatar game is cleared, the controller 10 proceeds to step 315. The controller 10 controls the memory 29 and the display 80 to reflect a game result caused by the execution of the multi-user avatar game to the avatar applied thereto, and to display an image in accordance with the game results at step 315. That is, the results of the multi-user avatar game are transmitted/received between the wireless terminals participating in the multi-user avatar game through the communication link, and the game results are reflected to the avatar information. Further, the avatar image in accordance with the multi-user avatar game is displayed. As shown in FIG. 1, the at least one wireless terminal or terminals, in which the communication link is set, are configured as master and slave terminals. An operation of reflecting the result of the multi-user avatar game in the avatar information and displaying the avatar image in accordance with the game result at step 315 will be described in greater detail below with reference to FIGS. 10, 11 and 12.

Thereafter, if the user inputs the multi-user avatar game completion key using the keypad 27, the controller 10 senses this at step 317 and controls the memory 29 to eliminate avatar information added in accordance with the initialization performance of the multi-user avatar game at step 319. Further, the controller 10 controls the memory 29 and the short-range communication module 35 to end the set communication link and the multi-user avatar game program at step 321.

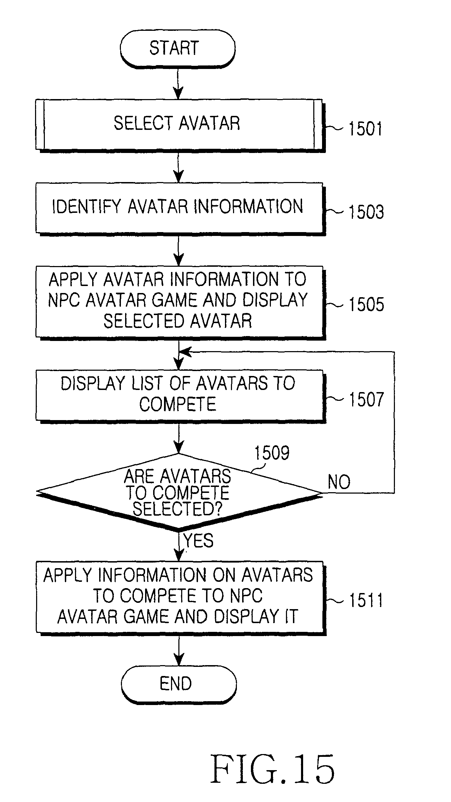

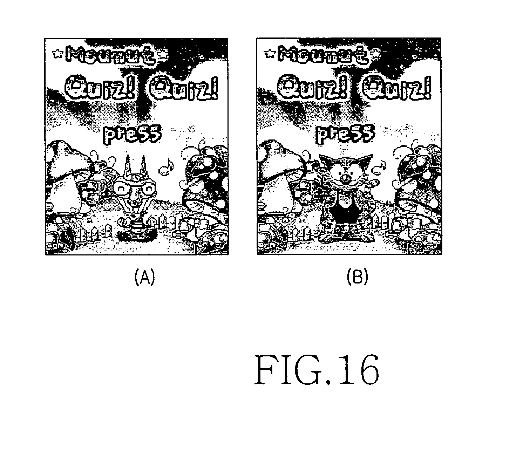

However, if the user selects the NPC (Non-Player Character) avatar game, which is the second item in the indicated avatar game list, using the keypad 27, the controller 10 senses this at step 323 and proceeds to step 325. The controller 10 controls the memory 29 to perform the NPC avatar game program at step 325. Further, the controller 10 controls the memory 29 to perform initialization for executing the NPC avatar game at step 327. Here, the initialization for executing the NPC avatar game denotes a series of processes of selecting an avatar to be applied to the NPC avatar game, selecting a avatar to compete with the selected avatar to display the selected avatar and the avatar to compete therewith, and then applying this to the NPC avatar game. An operation of performing the initialization for executing the NPC avatar game at step 327 will be described in greater detail below with reference to FIGS. 15 and 16.

Further, the controller 10 performs the initialization for executing the NPC avatar game, and then proceeds to step 329. The controller 10 controls the memory 29 and the display 80 to execute the NPC avatar game in accordance with the executed initialization at step 329. That is, the selected avatar is operated by the user, and the competing avatar selected as the opponent is operated in accordance with the predetermined scenario to execute the NPC avatar game. An operation of executing the NPC avatar game will be described in greater detail below with reference to FIGS. 6, 7, 8 and 9.

If the executed NPC avatar game is cleared, the controller 10 proceeds to step 331. The controller 10 controls the memory 29 and the display 80 to reflect game results caused by the execution of the NPC avatar game to the avatar information operated by the user, and to display the avatar image in accordance with the game results at step 331. That is, the results of the NPC avatar game are reflected to the avatar information operated by the user.

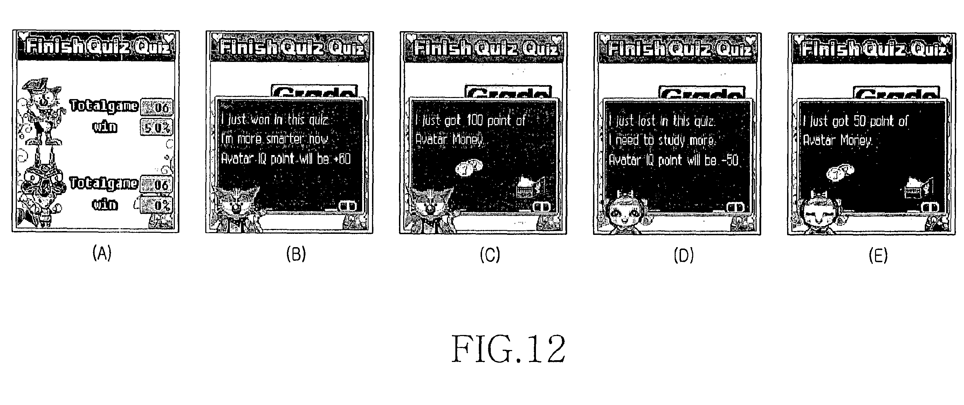

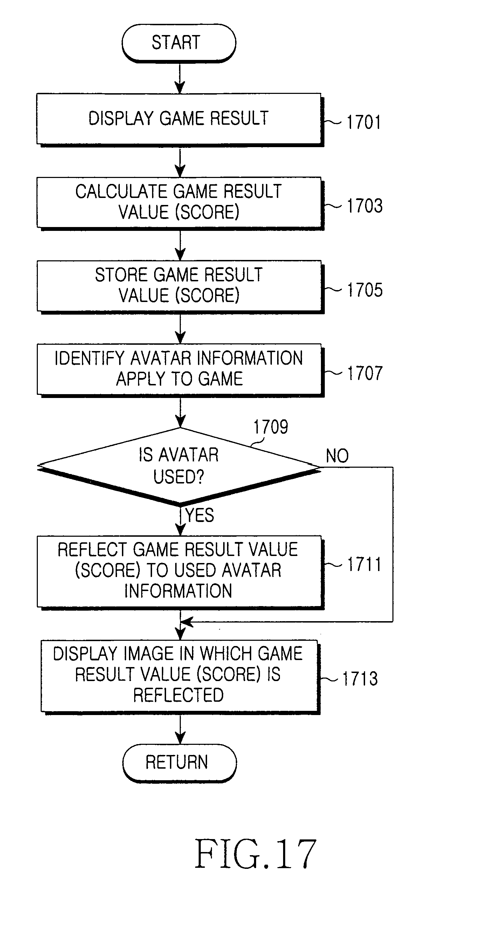

An operation of reflecting the result of the NPC avatar game in the avatar information and displaying the avatar image in accordance with the game result at step 331 will be described in greater detail below with reference to FIGS. 12 and 17.

Thereafter, if the user inputs the NPC avatar game completion key using the keypad 27, the controller 10 senses this at step 333 and controls the memory 29 to end the NPC avatar game program at step 335.

FIG. 4 is a flowchart illustrating an exemplary operation of initializing a multi-user avatar game in a master terminal according to an embodiment of the present invention. An initialization operation for transmitting/receiving avatar information to be applied to the multi-user avatar game in the master terminal will now be described with reference to FIG. 4. The controller 10 determines whether or not the wireless terminal is a master terminal, and if it is determined that the terminal is the master terminal, the controller 10 controls the short-range communication module 35 to set a communication link with a slave terminal at step 401. An exemplary process of setting the communication link has been described with reference to FIG. 1.

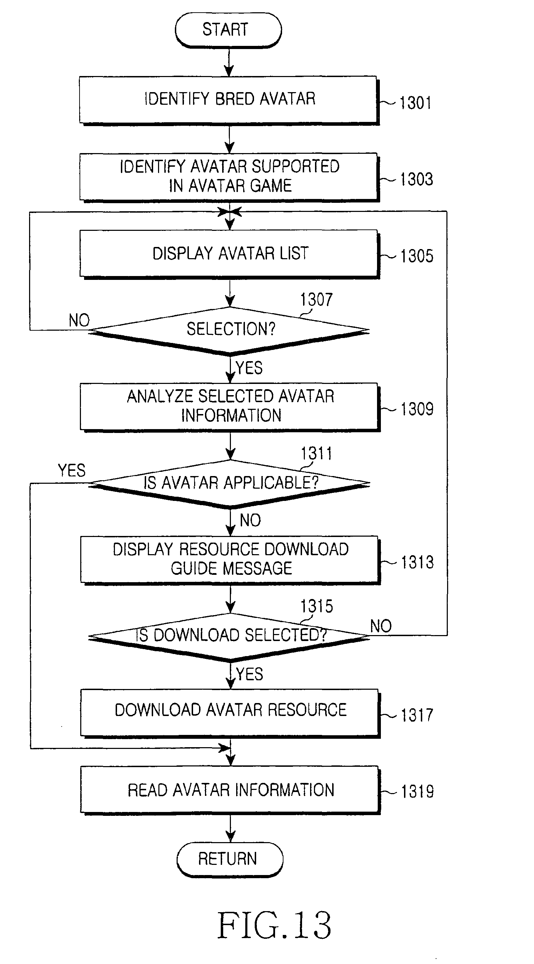

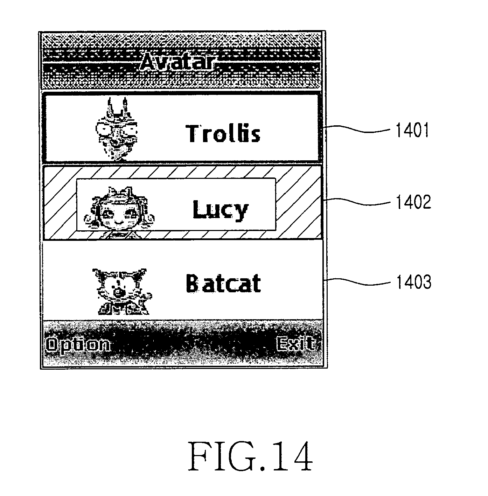

Further, the controller 10 controls the memory 29 and the display 80 to produce an avatar list applicable to the multi-user avatar game and to display it at step 403. Furthermore, if the user selects an avatar to be applied to the multi-user avatar game in the list using the keypad 27, the controller 10 analyzes the selected avatar information and reads it. An operation of selecting the avatar to be applied to the multi-user avatar game, analyzing the selected avatar information and reading it at step 403 will be described in greater detail below with reference to FIGS. 13 and 14.

Further, the controller 10 identifies the read avatar information and avatar information reception of the slave terminal stands by, which will be transmitted therefrom, at step 405. Here, avatar growth numerical value information, avatar image information, accumulated game score information, avatar state information, avatar game resource information and the like, are contained in the avatar information. The controller 10 applies the avatar information to control the difficulty of the multi-user avatar game and to display a character of the multi-user avatar game as the avatar corresponding to the avatar information.

Thereafter, if avatar information of the slave terminal is received by the short-range communication module 35 through the set communication link, the controller 10 senses this at step 407 and proceeds to step 409. Here, in a case where a plurality of slave terminals participate in the multi-user avatar game, avatar information is received from the respective slave terminals.

The controller 10 identifies the avatar information of the received slave terminal at step 409, controls the memory 29 to store the avatar information selected from the master terminal and the avatar information transmitted from the slave terminal at step 411, and then proceeds to step 413. The controller 10 controls the short-range communication module 35 to transmit the avatar information selected from the master terminal to the slave terminal at step 413. Here, in a case where a plurality of slave terminals participate in the multi-user avatar game, not only is the avatar information of the master terminal transmitted, but also the avatar information of all the slave terminals is transmitted to the respective slave terminals.

Further, the controller 10 controls the memory 29 to apply the avatar information of the master and slave terminals to the multi-user avatar game at step 415.

FIG. 5 is a flowchart illustrating an exemplary operation of initializing the multi-user avatar game in a slave terminal according to an embodiment of the present invention. An initialization operation for transmitting/receiving avatar information to be applied to the multi-user avatar game in the slave terminal will now be described with reference to FIG. 5. The controller 10 determines whether or not the wireless terminal is a slave terminal and controls the short-range communication module 35 to set a communication link with a master terminal if the terminal is determined to be the slave terminal at step 501. The process of setting the communication link has been described in detail with reference to FIG. 1.

Further, the controller 10 controls the memory 29 and the display 80 to produce an avatar list applicable to the multi-user avatar game, and to display it at step 503. Furthermore, if the user selects an avatar to be applied to the multi-user avatar game in the list using the keypad 27, the controller 10 analyzes the selected avatar information and reads it. An operation of selecting the avatar to be applied to the multi-user avatar game, analyzing the selected avatar information and reading it at step 503 will be described in greater detail below with reference to FIGS. 13 and 14.

Further, the controller 10 identifies the read avatar information at step 505. Here, avatar growth numerical value information, avatar image information, accumulated game score information, avatar state information, avatar game resource information and the like, are contained in the avatar information. The controller 10 applies the avatar information to control the difficulty of the multi-user avatar game, and to display a character of the multi-user avatar game as the avatar corresponding to the avatar information.

Further, if the user inputs a transmission key using the keypad 27, the controller 10 senses this at step 507 and proceeds to step 509. The controller 10 controls the short-range communication module 35 to transmit the selected avatar information to the master terminal at step 509.

Thereafter, if avatar information of the master terminal is received by the short-range communication module 35 through the set communication link, the controller 10 senses this at step 511 and proceeds to step 513. Here, in a case where a plurality of slave terminals participate in the multi-user avatar game, not only is the avatar information of the master terminal received, but also the avatar information from the respective slave terminals is received.

The controller 10 identifies the received avatar information of the master terminal, and controls the memory 29 to store the received avatar information of the master terminal at step 513. Here, if avatar information of another slave terminal applied to the multi-user avatar game is received, not only is the avatar information of the master terminal stored, but also the avatar information of the other slave terminal is stored.

Further, the controller 10 controls the memory 29 to apply the avatar information of the master and slave terminals to the multi-user avatar game at step 515.

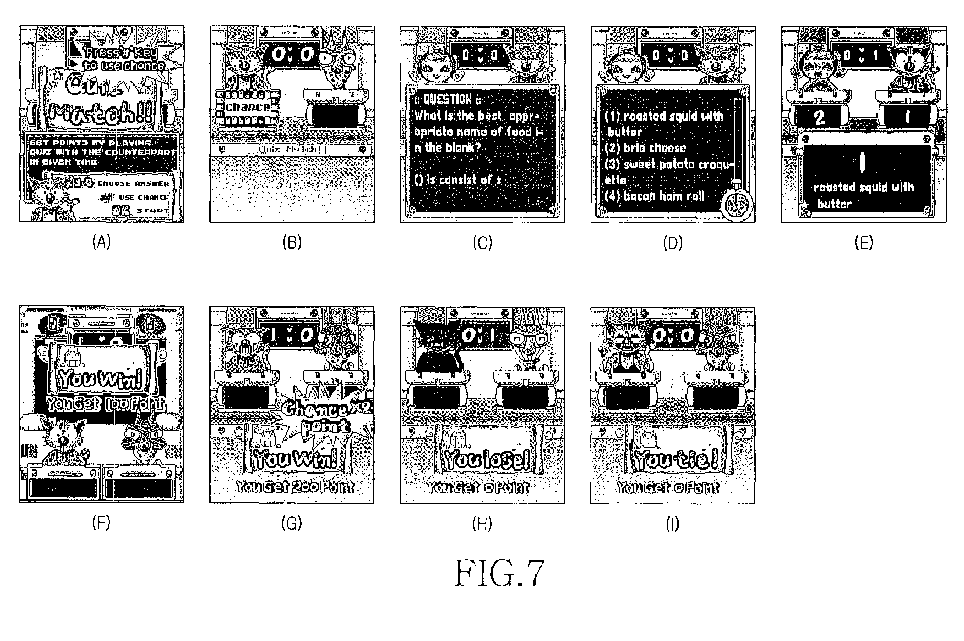

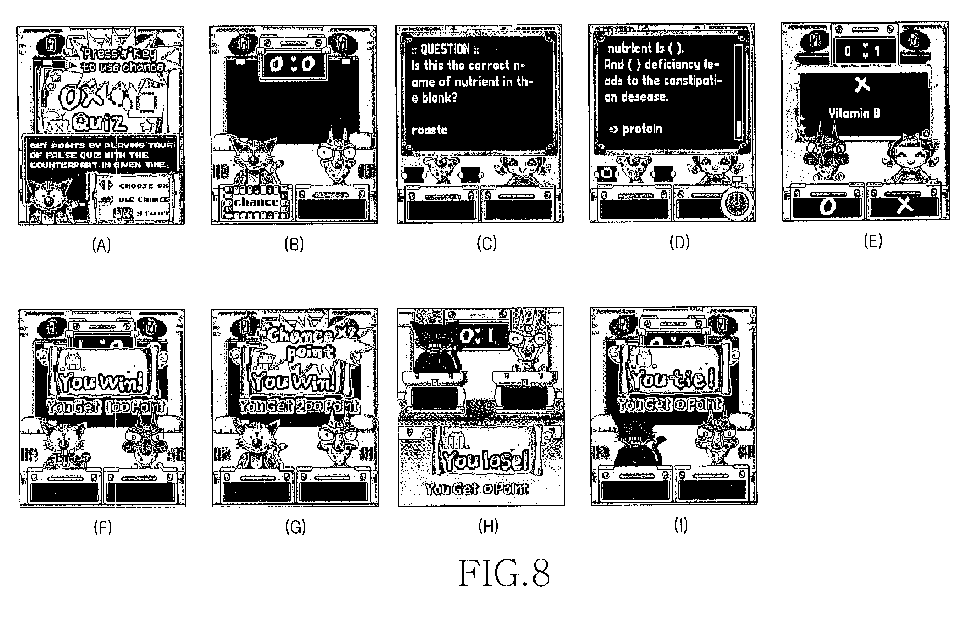

FIG. 6 is an exemplary view showing screens displayed while the avatar game is proceeding according to an embodiment of the present invention, FIG. 7 is an exemplary view showing screens displayed while a 'Quiz Match' avatar game is proceeding according to an embodiment of the present invention, and FIG. 8 is an exemplary view showing screens displayed while an 'OX Quiz' avatar game is proceeding according to an embodiment of the present invention.

The exemplary avatar game, which will be described with reference to FIGS. 6, 7 and 8, has a variety of methods, and the multi-user avatar game and the NPC (Non-Player Character) are applied to embodiments of the present invention. The multi-user avatar game denotes a network game in which a plurality of users enjoy one game at the same time and the NPC avatar game denotes a game in which, although a variety of game characters appear, only one of them is operated by a user and the rest thereof are operated in accordance with a predetermined scenario. The avatar game will now be discussed in a more detailed manner. The exemplary avatar game described in an embodiment of the present invention is a quiz game, in which a fixed number of problems are given to a user, and one stage is cleared if they solve all the given problems. Further, if the user provides a right answer, they become a winner, and the game results are reflected to avatar information applied to the avatar game.

The execution of the avatar game will now be discussed. When the avatar game is started, a log screen informing that it was started is displayed as shown in (A) of FIG. 6. Further, if a user inputs an identification key using the keypad 27, the controller 10 controls the memory 29 and the display 80 to display a main menu screen as shown in (B) of FIG. 6. In the displayed exemplary main menu screen, the main menu comprises 'New Game' 601, 'Saved Game' 602, 'Tutorial' 603, 'Option' 604, 'View Q/A' 605 and 'Exit' 606 items. If 'New Game' 601 is selected, a new avatar game is executed, and if 'Saved Game' 602 is selected, a previously stored avatar game is executed. Further, if 'Tutorial' 603 is selected, descriptions for the game is displayed, and if 'Option' 604 is selected, volume and sound effects are displayed. Furthermore, if 'View Q/A' 605 is selected, preliminary information required to play a quiz game, for example, knowledge information, can be retrieved, and if 'Exit' 606 is selected, the avatar game is ended and the contents of the executed game are automatically stored.

If the user selects 'New Game' 601 or 'Saved Game' 602 using the keypad 27, the controller 10 controls the memory 29 and the display 80 to apply avatar information collected through the initialization of the multi-user avatar game or the NPC avatar game to the avatar game, so that an avatar game progress start screen is displayed as shown in (C) of FIG. 6. Further, if the user or the opponent inputs a specific key in accordance with an order, a random spinner displayed on the avatar game progress start screen rotates as shown in (D) of FIG. 6 and then stops after a certain time has elapsed. Through the roulette operation, a quiz type is selected or a bonus score is obtained, in which a screen is displayed as shown in (E) of FIG. 6 if 'Quiz Match' is selected through the spinning operation, and a screen is displayed as shown in (F) of FIG. 6 if 'OX Quiz' is selected through the roulette operation. Further, if '+100' is selected through the roulette operation, a screen is displayed as shown in (G) of FIG. 6, and 100 points are imparted.

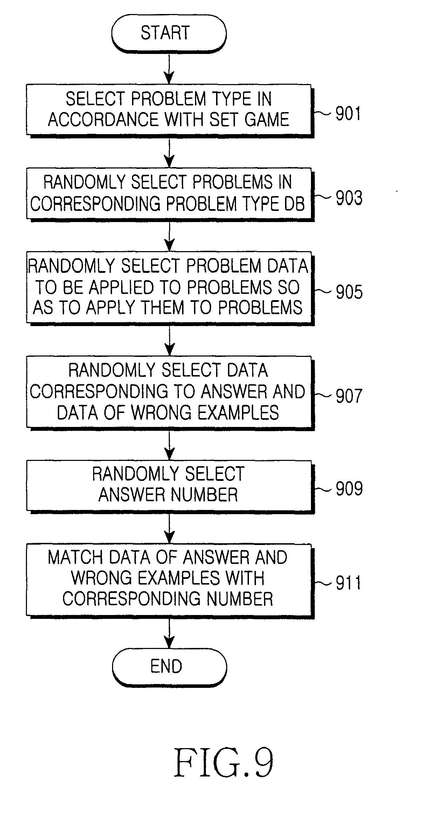

First, if 'Quiz Match' is selected through the spinning operation to execute the 'Quiz Match' avatar game, the controller 10 controls the memory 29 and the display 80 to display brief instructions for the 'Quiz Match' avatar game as shown in (A) of FIG. 7. Further, if the user inputs a chance key using the keypad 27, the controller 10 senses this and controls the memory 29 and the display 80 to display a screen informing that a chance function is applied as shown in (B) of FIG. 7. However, if the user inputs a game start key using the keypad 27, the controller 10 senses this and controls the memory 29 and the display 80 to produce a problem and output it as shown in (C) of FIG. 7, and then display examples corresponding to the problem as shown in (D) of FIG. 7 after a certain time has elapsed. Here, an operation of producing the problem and the corresponding examples will be described in greater detail below with reference to FIG. 9.

Further, if each of the user and the opponent inputs a number corresponding to an answer in the examples using the keypad 27 within a predetermined time, the controller 10 senses this and checks the time. After the predetermined time has elapsed, the controller 10 controls the memory 29 and the display 80 to display the numbers respectively input by the user and the opponent, and the number that represents the answer as shown in (E) of FIG. 7.

Further, in a case where the number input by the user is the answer and the number input by the opponent is not the answer, the user's avatar is displayed to have a pleased face and the opponent's avatar is displayed to have an angry face as shown in (F) of FIG. 7. Furthermore, if the user selects the chance function, the user can obtain a double score, and it is displayed as shown in (G) of FIG. 7. However, in a case where the number input by the user is not the answer and the number input by the opponent is the answer, the user's avatar is displayed to have an angry face and the opponent's avatar is displayed to have a pleased face as shown in (H) of FIG. 7. Further, in a case where both the numbers input by the user and opponent are the answer or not, both the user and opponent are displayed to have angry faces as shown in (I) of FIG. 7.

However, if 'OX Quiz' is selected through the spinning operation to execute the 'OX Quiz' avatar game, the controller 10 controls the memory 29 and the display 80 to display brief instructions for the 'OX Quiz' avatar game as shown in (A) of FIG. 8. Further, if the user inputs the chance key using the keypad 27, the controller 10 senses this, and controls the memory 29 and the display 80 to display a screen informing that the chance function was applied as shown in (B) of FIG. 8. However, if the user inputs the game start key using the keypad 27, the controller 10 senses this and controls the memory 29 and the display 80 to produce a problem and output it as shown in (C) of FIG. 8, and then to display an answer corresponding to the problem as shown in (D) of FIG. 8 after a certain time has elapsed. Here, an operation of producing the problem and the corresponding examples will be described in greater detail below with reference to FIG. 9.

Further, if each of the user and the opponent determines whether or not the problem is correctly matched with the answer and then inputs 'O' or 'X' using the keypad 27 within a predetermined time, the controller 10 senses this and checks the time. After the predetermined time has elapsed, the controller 10 controls the memory 29 and the display 80 to display 'O' or 'X' respectively input by the user and opponent and the answer as shown in (E) of FIG. 8.

Further, in a case where the user inputs a right answer and the opponent inputs a wrong answer, the user's avatar is displayed to have a pleased face, and the opponent's avatar is displayed to have an angry face as shown in (F) of FIG. 8. Furthermore, if the user selects the chance function, the user can obtain a double score and it is displayed as shown in (G) of FIG. 8. However, in a case where the user inputs a wrong answer and the opponent inputs a right answer, the user's avatar is displayed to have an angry face and the opponent's avatar is displayed to have a pleased face as shown in (H) of FIG. 8. Further, in a case where both of the user and opponent input right answers or wrong answers, both the user and opponent are displayed to have angry faces as shown in (I) of FIG. 8.

The user and opponent solve a fixed number of various problems through the aforementioned operations, and the avatar game is cleared if the output problems are all solved. Further, the number and difficulty of the problems is output differently depending on avatar information.

FIG. 9 is a flowchart illustrating an exemplary operation of producing a problem according to an embodiment of the present invention. An operation of producing problems of the 'Quiz Match' avatar game and the 'OX Quiz' avatar game will now be described with reference to FIG. 9. A problem type of the 'Quiz Match' avatar game is displayed in the memory 29 as shown by way of example in the following Table 4.

**Table 4**

| Number | Quiz Match Problems |
|---|---|
| 1 | What is the correct ingredient for this food? |
| 2 | What is the main nutrient for this dish (cuisine)? |
| 3 | What is the correct calorie count for this food? |
| 4 | Please select the right dish with the given calorie count. |
| 5 | Which is the most appropriate name for this food? |
| 6 | What is the most appropriate name of the food displayed? |
| 7 | What is the most appropriate name of the nutrient displayed? |
| 8 | What is the most appropriate name of the dish displayed? |
| 9 | What is the most correct explanation of this food? |
| 10 | What is the most incorrect explanation of this food? |
| 11 | How many calories are gained after eating this food? |
| 12 | How many calories will be gained compared to the daily recommended calories if you intake this food? |
| 13 | What is the best food when you try to gain weight? |
| 14 | What is the worst food when you try to gain weight? |
| 15 | What is the best food when you try to lose weight? |
| 16 | What is the worst food when you try to lose weight? |

Further, a problem type of the 'OX Quiz' avatar game is displayed in the memory 29 as shown by way of example in the following Table 5.

**Table 5**

| Number | OX Quiz Problems |
|---|---|
| 1 | Please check the following food and ingredients. Is this a correct match? |
| 2 | Please check the ingredients and nutrients of this dish. Is this a correct match? |
| 3 | Consider if the following 'food-calorie' match is correctly described. |
| 4 | Is this a correct explanation of this dish? |
| 5 | Is this the correct name of the food displayed? |
| 6 | Is this the correct name of the nutrient displayed? |
| 7 | Is this the correct name of the dish displayed? |
| 8 | If you intake the following food, will the daily recommend calories be exceeded? |
| 9 | If you're trying to lose body weight, please select the inadequate dish matches. |
| 10 | If you're trying to gain body weight, please select the appropriate dish matches. |

Further, data (information) for applying to the problem types of Table 4 and Table 5, and producing examples corresponding to the problem and the answer are stored as shown by way of example in the following Table 6.

**Table 6**

| Table Name | Contents |
|---|---|
| Food Stuff (Table 1) | Food and ingredient data |
| Stuff Nutrition (Table 2) | Food ingredient nutrient data |
| Food Kcal (Table 3) | Dish calorie data |
| Nutrition (Table 4) | Nutrient data |

FIG. 9 is a flowchart illustrating an exemplary operation of producing a problem according to an embodiment of the present invention. If the 'Quiz Match' avatar game or 'OX Quiz' avatar game is executed, the controller 10 controls the memory 29 to select the problem type of the selected avatar game at step 901, and proceeds to step 903. The controller 10 randomly selects a problem in a database of the corresponding problem type at step 903. For example, if the 'Quiz Match' avatar game is executed, a problem is randomly selected in the data base as shown in Table 4, and if the 'OX Quiz' avatar game is executed, a problem is randomly selected in the data base as shown in Table 5.

If a problem is randomly selected as described above, the controller 10 selects problem data to be applied to the problem in Table 6, and applies them to the selected problem at step 905. Since the randomly selected problem represents a composition of the problem, the problem is produced differently depending on the problem data. For example, if the first item in Table 4 is selected to produce a problem of the 'Quiz Match' avatar game, the problem is composed as "What is the correct ingredient for this food?". If the problem data in Table 6 is selected as "the Royal Court" (not shown), the problem is finally output as "What is the correct ingredient for this food? →the Royal Court". Further, if the first item in Table 5 is selected to produce a problem of the 'OX Quiz' avatar game, the problem is composed as "Please check the following food and ingredients. Is this a correct match?". If the problem data in Table 6 is selected as "Kimchi-Cabbage" (not shown), the problem is finally output as "Please check the following food and ingredients. Is this a correct match? →Kimchi-Cabbage".

In addition, after the problem has been produced, the controller 10 controls the memory 29 to randomly select answer data corresponding to the problem and false example data at step 907, and proceeds to step 909 so as to randomly select an answer number to be matched with the answer. Further, the controller 10 matches the answer data to the selected answer number, and matches false examples to the rest of the numbers at step 911.

FIG. 10 is a flowchart illustrating an exemplary operation of reflecting an execution result of the multi-user avatar game in the master terminal according to an embodiment of the present invention, and FIG. 12 is an exemplary view showing screens on which the results of the avatar game are displayed according to an embodiment of the present invention.

An operation of reflecting an execution result of the multi-user avatar game in the master terminal will now be described with reference to FIGS. 10 and 12. If the avatar game is cleared, it is determined whether or not the wireless terminal is a master terminal. If the terminal is determined to be the master terminal, the controller 10 controls the memory 29 and the display 80 to display avatar game results caused by the execution of the multi-user avatar game as shown in (A) of FIG. 12 at step 1001. Further, the controller 10 controls the memory 29 to convert (change) the avatar game results caused by the execution of the multi-user avatar game into avatar game result value by applying it to the following Table 7 shown by way of example, and to store the avatar game result value at step 1003.

**Table 7**

| Avatar Game Result | | Game Result Value | Avatar Money |
|---|---|---|---|
| Victory | Grade A (90% or more victorious) | +100 | +250 |
| | Grade B (80% or more victorious) | +80 | +200 |
| | Grade C (70% or more victorious) | +70 | +150 |
| | Grade D (70% or less victorious) | +60 | +100 |
| Draw | Grade E (50% victorious) | +50 | +70 |
| Defeat | Grade F (below 50% victorious) | -50 | +50 |

The avatar game result is derived as a different result value in accordance with victory/defeat and the winning percentage of the game, so as to reflect it to the avatar information applied to the avatar game.

If the user works out more problems provided at each stage than the opponent, the user wins the corresponding stage, while the user loses at the stage if the user works out fewer problems than the opponent. For example, assuming that a total of 7 problems are provided to one stage, if the user works out 4 problems and the opponent works out 3 problems, the user wins the stage. However, if the opponent works out 4 problems and the user works out 3 problems, the opponent wins the stage. Further, if the user and opponent work out the same number of problems, victory/defeat is not decided.

In addition, the winning percentage in Table 7 refers to a mean of victories at the total executed stages. For example, assuming that a game with a total of 10 stages to be executed before the execution of the avatar game is ended, if the user wins at 7 stages of them and the opponent wins at 3 stages, the winning percentage of the user is 70%, and a game result value (score) of +150 points and avatar money of +250 are imparted to the user. Further, if the winning percentage of the opponent is 30%, a game result value (score) of -150 points and avatar money of +50 are imparted to the user. Here, the game result value (score) is reflected to the avatar information applied to the avatar game so that it influences the growth of the avatar and the state change thereof. Further, the avatar money is the same concept as Internet money, and items for enhancing an item and/or avatar required for the growth of the avatar and the state change thereof can be purchased using the avatar money at an avatar house.

In addition, the controller 10 controls the short-range communication module 35 to transmit the avatar game result value (score) to the slave terminal at step 1005, and proceeds to step 1007. The controller 10 identifies the avatar information applied to the multi-user avatar game at step 1007, and proceeds to step 1009 so as to determine whether or not the avatar applied to the avatar game is an avatar used in the wireless terminal. If the avatar applied to the multi-user avatar game is determined to be an avatar used in the avatar function, the controller 10 proceeds to step 1011 and controls the memory 29 to reflect the obtained avatar game result value (score) to the avatar information. Further, the controller 10 proceeds to step 1013 so as to display the multi-user avatar game result value (score). For example, if the winning percentage is over 50% to below 70%, a game result value (score) of +60 is obtained and is displayed as shown in (B) of FIG. 12, and avatar money of +100 is obtained and is displayed as shown in (C) of FIG. 12. However, if the winning percentage is below 50%, a game result value (score) of -50 is obtained and is displayed as shown in (D) of FIG. 12, and avatar money of +50 is obtained and is displayed as shown in (E) of FIG. 12.

However, if the avatar applied to the avatar game is not an avatar used in the avatar function as the determination result, the controller 10 does not reflect the obtained avatar game result (score), but proceeds to step 1013 so as to display the multi-user avatar game result value (score) as shown in (B) to (E) of FIG. 12.

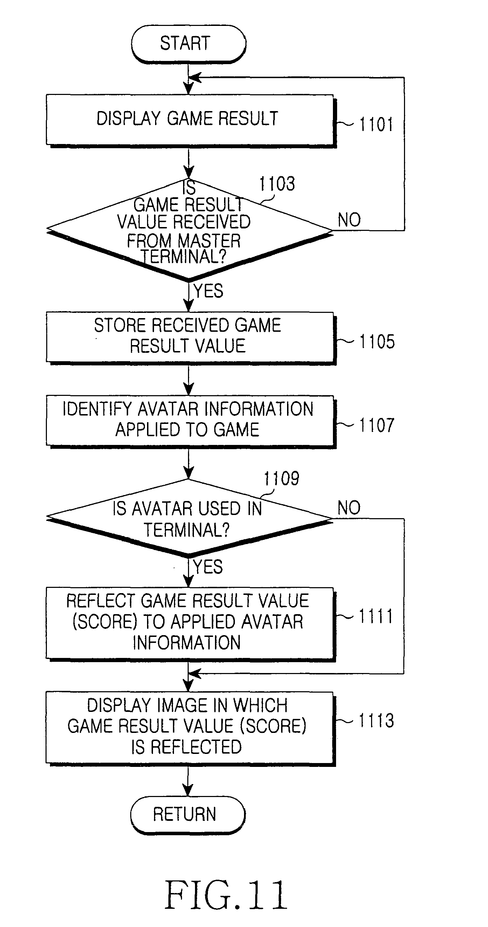

FIG. 11 is a flowchart illustrating an exemplary operation of reflecting an execution result of the multi-user avatar game in the slave terminal according to the embodiment of the present invention, and FIG. 12 is an exemplary view showing screens on which a result of the avatar game is displayed according to an embodiment of the present invention.

An operation of reflecting an execution result of the multi-user avatar game in the slave terminal will now be described with reference to FIGS. 11 and 12. If the avatar game is cleared, it is determined whether or not the wireless terminal is a slave terminal. If the wireless terminal is a slave terminal as a determination result, the controller 10 controls the memory 29 and the display 80 to display an avatar game result caused by the execution of the multi-user avatar game as shown in (A) of FIG. 12 at step 1101.

Further, if the game result value (score) is received from the master terminal through short-range communications, the controller 10 senses this at step 1103. Further, the controller 10 controls the memory 29 to store the received avatar game result value (score) at step 1105, and proceeds to step 1107. The controller 10 identifies the avatar information applied to the multi-user avatar game at step 1107, and proceeds to step 1109 so as to determine whether or not the avatar applied to the multi-user avatar game is an avatar used in the avatar function. If the avatar applied to the avatar game is determined to be an avatar used in the avatar function, the controller 10 proceeds to step 1111 and controls the memory 29 to reflect the obtained avatar game result value (score) to the avatar information. Further, the controller 10 proceeds to step 1113 so as to display the multi-user avatar game result value (score). For example, if the winning percentage is over 50% to below 70, a game result value (score) of +60 is obtained and is displayed as shown in (B) of FIG. 12, and avatar money of +100 is obtained and is displayed as shown in (C) of FIG. 12. However, if the winning percentage is below 50%, a game result value (score) of -50 is obtained and is displayed as shown in (D) of FIG. 12, and avatar money of +50 is obtained and is displayed as shown in (E) of FIG. 12.

However, if the avatar applied to the avatar game is not an avatar used in the avatar function as the determination result, the controller 10 does not reflect the obtained avatar game result value (score), but proceeds to step 1113 so as to display the multi-user avatar game result value (score) as shown in (B) to (E) of FIG. 12.

FIG. 13 is a flowchart illustrating an exemplary operation of selecting an avatar to be applied to the avatar game according to an embodiment of the present invention, and FIG. 14 is an exemplary view showing a screen on which the image of an avatar to be selected is displayed according to an embodiment of the present invention.

An operation of selecting an avatar to be applied to the avatar game and analyzing the selected avatar information will now be described with reference to FIGS. 13 and 14. If the multi-user avatar game program is performed, and a communication link between wireless terminals or a program for executing the NPC avatar game is performed, the controller 10 controls the memory 29 to identify an avatar bred in the avatar function at step 1301, and identifies avatars supplied in the avatar game at step 1303. Further, the controller 10 displays a list of avatars supplied in the avatar game as shown in FIG. 14 using avatar information used in the avatar function and avatar information supplied in the avatar game at step 1305. In FIG. 14, reference numeral 1401 denotes an avatar used in the avatar function, and reference numeral 1402 denotes an avatar that is not supplied in the avatar game but used in the avatar function. That is, in order to apply the avatar of reference numeral 1402 to the avatar game, an additional resource supplied in the avatar game should be downloaded. Further, reference numeral 1403 denotes an avatar that is not used in the avatar game but supplied in the avatar function.

Thereafter, if a user selects an avatar to be applied to the avatar game in the displayed avatar list using the keypad 27, the controller 10 senses this at step 1307, and analyzes information on the selected avatar at step 1309. Here, avatar growth numerical value information, avatar image information, accumulated game score information, avatar state information, avatar game resource information and the like, are contained in the avatar information.

Further, the controller 10 determines whether or not the selected avatar is applicable to the avatar game at step 1311. If the selected avatar is applicable to the avatar game as a determination result, the controller 10 proceeds to step 1319 so as to read the selected avatar information.

However, if the selected avatar is not applicable to the avatar game as the determination result, the controller 10 proceeds to step 1313, and controls the memory 29 and the display 80 to display a resource download guide message. If the user selects a download using the keypad 27 in accordance with the resource download guide message, the controller 10 senses this at step 1315, and controls the RF unit 21 to request a resource corresponding to the selected avatar to an avatar game server, and to download the correspondent resource from the avatar game server at step 1317. Further, the controller 10 proceeds to step 1319 so as to read the selected avatar information.

FIG. 15 is a flowchart illustrating an exemplary operation of initializing an NPC avatar game in the wireless terminal according to an embodiment of the present invention, and FIG. 16 is an exemplary view showing screens on which the image of an avatar to be applied to the NPC avatar game is displayed according to an embodiment of the present invention.

An operation of selecting an avatar to be applied to the NPC avatar game in the wireless terminal, applying this to the NPC avatar game and displaying it will now be described with reference to FIGS. 15 and 16. If the NPC avatar game program is performed, the controller 10 controls the memory 29 and the display 80 to produce a list of avatars applicable to the NPC avatar game and to display it at step 1501. Further, if the user selects an avatar to be applied to the NPC avatar game in the list of avatars using the keypad 27, the controller 10 analyzes information on the selected avatar and reads this. An operation of selecting an avatar to be applied to the NPC avatar game, analyzing information on the selected avatar, and reading this at step 1501 has been described above in reference to FIGS. 13 and 14.

Further, the controller 10 identifies the read avatar information at step 1503, and proceeds to step 1505. The controller 10 controls the memory 29 and the display 80 to apply the avatar information to the NPC avatar game, and to display the selected avatar as shown in (A) of FIG. 16 at step 1505. Further, the controller 10 controls the memory 29 and the display 80 to display a competition avatar list for selecting an avatar to compete with the selected avatar at step 1507. Here, the competition avatar list is comprised of avatars excluding the avatar used in the avatar function provided to the wireless terminal.

Further, if the user selects a competition avatar in the competition avatar list using the keypad 27, the controller 10 senses this at step 1509, and proceeds to step 1511. The controller 10 controls the memory 29 and the display 80 to apply information on the selected competition avatar to the NPC avatar game, and to display the selected avatar as shown in (B) of FIG. 16 at step 1511.

FIG. 17 is a flowchart illustrating an exemplary operation of reflecting an execution result of the NPC avatar game in the wireless terminal according to an embodiment of the present invention, and FIG. 12 is an exemplary view showing screens on which a result of the avatar game is displayed according to an embodiment of the present invention.

An operation of reflecting an execution result of the NPC avatar game in avatar information in the wireless terminal will now be described with reference to FIGS. 12 and 17. If the avatar game is cleared, the controller 10 controls the memory 29 and the display 80 to display an avatar game result caused by the execution of the NPC avatar game as shown in (A) of FIG. 12 at step 1701. Further, the controller 10 controls the memory 29 to calculate the avatar game results caused by the execution of the NPC avatar game as an avatar game result value at step 1703. A method of calculating the avatar game result value has been described in detail above in reference to FIG. 11.

Further, the controller 10 controls the memory 29 to store the calculated avatar game result value (score) at step 1705, and proceeds to step 1707. The controller 10 identifies the avatar information applied to the NPC avatar game at step 1707, and proceeds to step 1709 so as to determine whether or not the avatar applied to the avatar game is an avatar used in the avatar function. If the avatar applied to the avatar game is determined to be an avatar used in the avatar function, the controller 10 proceeds to step 1711 and controls the memory 29 to reflect the obtained avatar game result value (score) to the avatar information. Further, the controller 10 proceeds to step 1713 so as to display the NPC avatar game result value (score). For example, if the winning percentage is over 50% to below 70%, a game result value (score) of +60 is obtained and is displayed as shown in (B) of FIG. 12, and avatar money of +100 is obtained and is displayed as shown in (C) of FIG. 12. However, if the winning percentage is below 50%, a game result value (score) of -50 is obtained and is displayed as shown in (D) of FIG. 12, and avatar money of +50 is obtained and is displayed as shown in (E) of FIG. 12.

However, if the avatar applied to the avatar game is not determined to be an avatar used in the avatar function, the controller 10 does not reflect the obtained avatar game result value (score), and proceeds to step 1713 so as to display the multi-user NPC game result value (score) as shown in (B) to (E) of FIG. 12.

As described above, embodiments of the present invention have advantages in that there is provided a method of applying an avatar used in an avatar function provided to a wireless terminal in a game so as to execute it, and reflecting the results of the game in the breeding of the avatar, so that a user can enjoy the game with various characters when executing the same game, and the difficulty of the game is automatically set depending on the level on the avatar without the setting of the user's difficulty, thereby improving user's enjoyment. Further, there is an advantage in that a user can execute one game with other users at the same time, and a result of the game is reflected to another function so that user's interests may be increased.

Exemplary embodiments of the present invention can also be embodied as computer-readable code on a computer-readable recording medium. The computer-readable recording medium can comprise any data storage device that can store data which can thereafter be read by a terminal. Examples of the computer-readable recording medium include read-only memory (ROM), random-access memory (RAM), CD-ROMs, magnetic tapes, floppy disks, optical data storage devices, and carrier waves (such as data transmission through the Internet). The computer-readable recording medium can also be distributed over network coupled systems, so that the computer-readable code can be stored and executed in a distributed fashion. Also, functional programs, codes, and code segments for accomplishing embodiments of the present invention can be easily construed by programmers skilled in the art to which the present invention pertains.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method of executing an avatar game with at least one wireless terminal, comprising:
setting a communication link with at least one wireless terminal and
transmitting/receiving information on avatars to be applied to an avatar game if a key of the avatar game is input through a user's request;
applying transmitted/received information on avatars to the avatar game so as to execute the avatar game; and
indicating an execution result of the avatar game in the information on avatars so as to update the information.

2. The method as claimed in claim 1, wherein the step of transmitting/receiving information on avatars to be applied to the avatar game comprises:
selecting an avatar to be applied to the avatar game, and receiving avatar information from the at least one wireless terminal with which the communication link is set; and
storing the avatar information received from the at least one wireless terminal and information on the selected avatar, and transmitting the information on the selected avatar to the at least one wireless terminal.

3. The method as claimed in claim 2, further comprising, wherein if information on the respective avatars is received from the at least one wireless terminal, transmitting the information on the selected avatar and the received information on the respective avatars to the at least one wireless terminal.

4. The method as claimed in claim 2, wherein selecting an avatar to be applied to the avatar game comprises:
displaying a list of avatars applicable to the avatar game;
analyzing the information of the selected avatar to determine whether the selected avatar is an avatar supplied in the avatar game if an avatar to be applied is selected from the list of avatars; and
downloading a resource such that the selected avatar can be applied to the avatar game if the selected avatar is not supplied in the avatar game.

5. The method as claimed in claim 1, wherein the avatar information comprises avatar growth numerical value information, avatar image information, accumulated game score information, avatar state information, and avatar game resource information.

6. The method as claimed in claim 1, wherein applying the transmitted/received information on avatars comprises:
reading the transmitted/received information on avatars; and
controlling the difficulty of the avatar game using the read information on avatars, and displaying a character of the avatar game as the avatar.

7. The method as claimed in claim 1, wherein executing the avatar game comprises:
displaying an avatar game initial screen including the avatar information collected through the communication link when starting the avatar game;
producing a problem to be applied to the execution of the avatar game and
outputting the problem;
determining whether or not the input data is data requested in the problem if data in accordance with the output problem is input; and
displaying an image in accordance with the determination result.

8. The method as claimed in claim 7, wherein producing a problem to be applied to the avatar game and outputting the problem comprises:
randomly selecting a problem corresponding to a selected problem type if the problem type of the avatar game is selected;
randomly selecting problem data to be applied to the selected problem;
applying the selected problem data to the selected problem so as to create a problem;
randomly selecting answer data corresponding to the created problem and
false example data, and randomly selecting an answer number to be matched with the answer data; and
matching the answer data with the selected answer number, and matching false examples with remaining numbers.

9. The method as claimed in claim 1, wherein indicating the execution result of the avatar game in the information on avatars comprises:
converting the execution result of the avatar game into an avatar game result value;
transmitting the converted avatar game result value to the at least one wireless terminal;
determining whether or not the avatar applied to the avatar game is an avatar used in the wireless terminal; and
indicating the converted avatar game result value in the information on avatars if the avatar applied to the avatar game is an avatar used in the avatar function.

10. A method of executing an avatar game in a wireless terminal, comprising:
selecting an avatar to be applied to the avatar game, and identifying information of the selected avatar if a key of the avatar game is input through a user's request;
selecting an avatar to compete with the selected avatar;
applying the information on the selected avatar and information on the avatar, which will compete, to the avatar applied to the atavar game so as to execute the avatar game; and
indicating an execution result of the avatar game in the information on the avatar applied game so as to update the information.

11. The method as claimed in claim 10, wherein selecting an avatar to be applied to the avatar game comprises:
displaying a list of avatars applicable to the game;
analyzing information on a selected avatar to determine whether or not the selected avatar is supplied in the avatar game, if the avatar to be applied to the game from the list of avatars is selected; and
downloading a resource such that the selected avatar can be applied to the avatar game if the selected avatar is not an avatar supplied in the game.

12. The method as claimed in claim 10, wherein selecting an avatar to compete with the selected avatar comprises:
displaying a list of the avatars excluding the selected avatar; and
analyzing information on the avatar, which will compete, and displaying the information if the avatar to compete with the selected avatar is selected in the displayed list of avatars.

13. The method as claimed in claim 10, wherein the avatar information comprises avatar growth numerical value information, avatar image information, accumulated game score information, avatar state information, and avatar game resource information.

14. The method as claimed in claim 10, wherein applying the avatar information to the avatar game comprises:
reading the avatar information; and
controlling the difficulty of the avatar game using the read avatar information, and displaying a character of the avatar game as the avatar.

15. The method as claimed in claim 10, wherein executing the avatar game comprises:
displaying an avatar game initial screen comprising the selected avatar information and the information on the avatar, which will compete, when starting the avatar game;
producing a problem to be applied to the execution of the avatar game and
outputting the problem;
determining whether or not the input data is data requested in the problem if data in accordance with the output problem is input; and
displaying an image in accordance with the determination result.

16. The method as claimed in claim 15, wherein producing a problem to be applied to the avatar game and outputting the problem comprises:
randomly selecting a problem corresponding to a selected problem type if the problem type of the avatar game is selected;
randomly selecting problem data to be applied to the selected problem;
applying the selected problem data to the selected problem so as to create a problem;
randomly selecting answer data corresponding to the created problem and
false example data, and randomly selecting an answer number to be matched with the answer data; and
matching the answer data with the selected answer number, and matching false examples with remaining numbers.

17. The method as claimed in claim 10, wherein indicating the execution result of the avatar game in the information on the avatar comprises:
converting the execution result of the avatar game into an avatar game result value;
determining whether or not the avatar applied to the game is an avatar used in the wireless terminal; and
indicating the converted avatar game result value in the information on avatars if the avatar applied to the game is an avatar used in the avatar function.

18. The method as claimed in claim 10, wherein the avatar that will compete is operated through a predetermined scenario of the avatar game.

19. A computer-readable recording medium having stored thereon instructions for executing an avatar game with at least one wireless terminal, comprising:
a first set of instructions for setting a communication link with at least one wireless terminal and transmitting/receiving information on avatars to be applied to an avatar game if a key of the avatar game is input through a user's request;
a second set of instructions for applying transmitted/received information on avatars to the avatar game so as to execute the avatar game; and
a third set of instructions for indicating an execution result of the avatar game in the information on avatars so as to update the information.

20. A computer-readable recording medium having stored thereon instructions for executing an avatar game in a wireless terminal, comprising:
a first set of instructions for selecting an avatar to be applied to the avatar game, and identifying information of the selected avatar if a key of the avatar game is input through a user's request;
a second set of instructions for selecting an avatar to compete with the selected avatar;
a third set of instructions for applying the information on the selected avatar and information on the avatar, which will compete, to the avatar game so as to execute the avatar game; and
a fourth set of instructions for indicating an execution result of the avatar game in the information on the avatar applied game so as to update the information.
